# EUROPÄISCHE PATENTSCHRIFT

(11) **EP 0 975 643 B1**
(45) Veröffentlichungstag und Bekanntmachung des Hinweises auf die Patenterteilung: **03.07.2002**
(21) Anmeldenummer: 98922666.7
(22) Anmeldetag: 08.04.1998
(51) Int. Cl.: C07F 9/38, C07F 9/40

(54) **VERFAHREN ZUR HERSTELLUNG VON VINYLPHOSPHONSÄURE-VERBINDUNGEN**
METHOD FOR PRODUCING VINYL PHOSPHONIC ACID COMPOUNDS
PROCEDE POUR PREPARER DES COMPOSES D'ACIDE VINYLPHOSPHONIQUE

(30) Priorität: 15.04.1997 DE 19715667
(43) Veröffentlichungstag der Anmeldung: 02.02.2000
(73) Patentinhaber: BASF AKTIENGESELLSCHAFT, 67056 Ludwigshafen (DE)
(72) Erfinder: HENKELMANN, Jochem, D-68165 Mannheim (DE); PREISS, Thomas, D-67065 Ludwigshafen (DE); BÖTTCHER, Arnd, D-67227 Frankenthal (DE)
(74) Vertreter: Isenbruck, Günter, Dr.
(86) Internationale Anmeldenummer: EP9802037
(87) Internationale Veröffentlichungsnummer: WO9846613

(56) Entgegenhaltungen:
- EP-A- 0 722 948
- US-A- 3 673 285
- US-A- 3 681 481
- HAN L B ET AL: "Palladium-Catalyzed Hydrophosphorylation of Alkynes via Oxidative Addition of HP(O)(OR)2" J. AM. CHEM. SOC. (JACSAT,00027863);96; VOL.118 (6); PP.1571-2, XP002074779 National Institute of Materials and Chemical Research;Tsukuba; 305; Japan (JP) in der Anmeldung erwähnt
- HAN L -B ET AL: "OXIDATIVE ADDITION OF HP(O)PH2 TO PLATINUM(0) AND PALLADIUM(0) COMPLEXES AND PALLADIUM-CATALYZED REGIO- AND STEREOSELECTIVE HYDROPHOSPHINYLATION OF ALKYNES" ORGANOMETALLICS, Bd. 15, Nr. 15, 23. Juli 1996, Seiten 3259-3261, XP000677651

## Beschreibung

Die vorliegende Erfindung betrifft ein Verfahren zur Herstellung von Vinylphosphonsäure-Verbindungen unter Verwendung bestimmter Katalysatoren, sowie die Verwendung derartiger Katalysatoren für das Herstellungsverfahren.

Vinylphosphonsäure-Verbindungen, insbesondere Vinylphosphonsäuredialkylester sind als Vorprodukte für die Herstellung von Vinylphosphonsäure sowie als Monomere zur Copolymerisation für die Herstellung von Klebstoffen oder flammfesten Kunststoffen von Bedeutung.

Zu ihrer Herstellung sind unterschiedliche Verfahren bekannt. In dem in der DE-C-21 32 962 beschriebenen Verfahren werden Ethylenoxid mit Phosphor-' trichlorid zu 2-Chlorethanphosphonsäuredichlorid und diese Verbindung zu 2-Chlorethanphosphonsäure-bis-2-chlorethylester umgesetzt. Die so erhaltene Verbindung wird sodann in Gegenwart eines Katalysators mit Phosgen umgesetzt. Als Katalysator kommen Amine, heterocyclische Stickstoffverbindungen, wie auch tertiäre Phosphine zum Einsatz.

In der DE-A-30 01 894 ist ein Verfahren zur Herstellung von Vinylphosphonsäurederivaten beschrieben, bei dem 2-Acetoxyethanphosphonsäuredialkylester in Gegenwart saurer oder basischer Katalysatoren gespalten werden. Als basische Katalysatoren werden tertiäre Amine und Phosphine, wie auch Ammoniumsalze oder Phosphoniumsalze neben heterocyclischen Verbindungen und Säureamiden vorgeschlagen. Nachteil des Verfahrens ist die Bildung eines Gemisches von Vinylphosphonsäurederivaten. Der Anteil an Vinylphosphonsäuredialkylestern beträgt maximal 23%.

Eine verbesserte Variante dieses Verfahrens gemäß DE-A-31 20 437 beinhaltet nach einer Destillation die Umsetzung des im Destillationssumpf anfallenden Produktgemisches mit Carbonsäureorthoestern zu Vinylphosphonsäuredialkylestern.

Gemäß EP-A-0 722 948 wird 2-Acetoxyethanphosphonsäuredimethylester in der Gasphase thermisch in Essigsäure und Vinylphosphonsäuredimethylester gespalten. Dabei wird kein Katalysator verwendet.

Nachteile der vorstehenden Verfahren sind die Bildung von Produktgemischen, aufwendige, mehrstufige Syntheseverfahren, der erforderliche Einsatz hoher Umsetzungstemperaturen und der Einsatz chlorierter Ausgangsverbindungen. Insbesondere der große Nebenproduktanteil verschlechtert die Verfahrensökonomie beträchtlich.

Vorteilhaft zur Synthese von Vinylphosphonsäure-Verbindungen ist eine einfache Additionsreaktion, die in hohen Ausbeuten zum gewünschten Produkt führt. Ein Beispiel für eine solche Umsetzung ist die Addition von Dialkylphosphiten an Acetylen. In der US 3,673,285 ist die Addition von Alkinen an Diethylphosphit bei Temperaturen von 130 bis 200°C in Gegenwart von Nickel-Phosphinkomplexen beschrieben. Bei der Addition von Acetylen wird der entsprechende Vinylphosphonsäurediethylester in einer Ausbeute von 30 % erhalten. Nachteil dieses Verfahrens ist neben der geringen Ausbeute die Neigung der Phosphorigsäureester zur Zersetzung in stark exothermer Reaktion schon bei Temperaturen um 130°C.

Aufgabe der vorliegenden Erfindung ist die Bereitstellung eines Verfahrens zur Herstellung von Vinylphosphonsäureverbindungen, das die Nachteile der bekannten Verfahren vermeidet und die gewünschten Produkte aus Acetylen und Phosphorigsäureverbindungen mit hoher Selektivität und Ausbeute unter milden Bedingungen zugänglich macht.

Die Aufgabe wird gelöst durch ein Verfahren zur Herstellung von Vinylphosphonsäure-Verbindungen der allgemeinen Formel (1), 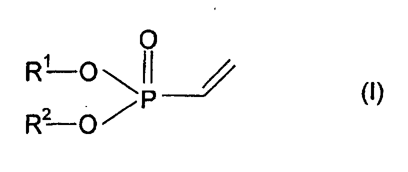 in der R¹ und R² unabhängig H, C₁₋₁₆-Alkyl-, C₆₋₁₂-Aryl-, C₇₋₁₂-Alkaryl- oder C₇₋₁₂-Aralkylreste sind, wobei die organischen Reste durch ein oder mehrere Halogenatome, Hydroxyl-, Acyl- oder Acetoxygruppen substituiert sein können,
durch Umsetzung von Phosphorigsäure-Verbindungen der allgemeinen Formel (II), 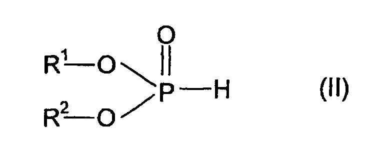 in der R¹ und R² die vorstehende Bedeutung haben,
mit Acetylen in Gegenwart eines Pd(II)-Komplexes und/oder eines Pd(0)-Komplexes oder entsprechenden Pt-Komplexen als Katalysator, bei einer Temperatur von 20 bis 80°C.

Erfindungsgemäß wurde gefunden, daß die Umsetzung von Acetylen mit Phosphorigsäureverbindungen, insbesondere Dialkylphosphiten, zu Vinylphosphonsäure-Verbindungen, insbesondere Vinylphosphonsäuredialkylestern mit hoher Selektivität und Ausbeute durch Verwendung einer katalytischen Menge eines Palladium- oder Platinkomplexes, vorzugsweise Palladiumkomplexes, insbesondere in homogener Phase, möglich ist. Ähnliche Palladiumkomplexe wurden bereits zur Hydrophosphorylierung von terminalen höheren Alkinen, wie 1-Octin, eingesetzt, siehe J. Am. Chem. Soc., 1996, 118, Seiten 1571 bis 1572. Eine Umsetzung mit Acetylen ist jedoch nicht erwähnt oder vorgeschlagen.

Erfindungsgemäß wurde gefunden, daß sich Acetylen unter sehr milden Bedingungen mit sehr hoher Selektivität unter Verwendung eines Palladiumkatalysators direkt zu Vinylphosphonsäure-Verbindungen, insbesondere Vinylphosphonsäuredialkylestern umsetzen läßt, ohne daß es zu einer Dimerisierung, Oligomerisierung oder Polymerisation von Acetylen kommt oder eine doppelte Umsetzung zu einem Tetraalkylethylendiphosphonat erfolgt.

In den zur Umsetzung eingesetzten Phosphorigsäure-Verbindungen der allgemeinen Formel (II) sind R¹ und R² unabhängig H, C₁₋₁₆-Alkyl-, C₆₋₁₂-Aryl-, C₇₋₁₂-Alkaryl- oder C₇₋₁₂-Aralkylreste, wobei die organischen Reste durch ein oder mehrere Halogenatome, Hydroxyl-, Acyl- oder Acetoxygruppen substituiert sein können. Vorzugsweise sind R¹ und R² unabhängig lineare C₁₋₁₂-Alkyl-, Phenyl-, (C₁₋₆-Alkyl)phenyl- oder Phenyl(C₁₋₆-alkyl)reste. Besonders bevorzugt sind R¹ und R² unabhängig lineare C₁₋₆-Alkylreste. Vorzugsweise sind diese Reste nicht substituiert.

Sind die Reste R¹ und R² von Wasserstoff verschieden, so handelt es sich bei den eingesetzten Verbindungen um Phosphorigsäurediester. Ihre Umsetzung führt zu Vinylphosphonsäurediestern der allgemeinen Formel (I). Nach dieser Umsetzung können die Estergruppen gespalten werden, wobei Vinylphosphonsäure, R¹OH und R²OH erhalten werden.

Die Umsetzung der Phosphorigsäure-Verbindungen zu den Vinylphosphonsäure-Verbindungen erfolgt in Gegenwart eines Pd(II)-Komplexes und/oder eines Pd(0)-Komplexes oder entsprechenden Pt-Komplexes, vorzugsweise jedoch Pd-Komplexes als Katalysator. Dabei liegt der Katalysator in der Regel in homogener Phase vor.

Der eingesetzte Pd(0)-Komplex weist vorzugsweise Phosphinliganden oder Phosphitliganden auf. Als Phosphinliganden oder Phosphitliganden sind eine Vielzahl von Liganden geeignet. Beispielsweise können die Liganden die allgemeine Formel PXYZ aufweisen, wobei X, Y und Z unabhängig Alkyl-, Aryl-, Alkoxy- oder Aryloxyreste mit bis zu 18 C-Atomen sind. Bevorzugt sind dabei Alkyl- oder Arylreste, insbesondere Arylreste. Entsprechende Liganden sind beispielsweise in DE-A-1 593 277 beschrieben. Dabei handelt es sich vorzugsweise um Triarylphosphine oder Triarylphosphite, in denen die Arylgruppen gegebenenfalls substituiert sind. Geeignete Substituenten sind C₁₋₆-Alkyl-, Acyl- oder Acetoxyreste. Vorzugsweise ist das Triarylphosphin nicht substituiert. Insbesondere wird Triphenylphosphin als Phosphinligand eingesetzt. Erfindungsgemäß besonders bevorzugt wird Tetrakis-(triphenylphosphin)-palladium(0) als Katalysator verwendet.

Die Komplexe können beispielsweise aus ein- oder zweizähnigen Liganden aufgebaut sein. Beispiele geeigneter Komplexstrukturen sind die folgenden: 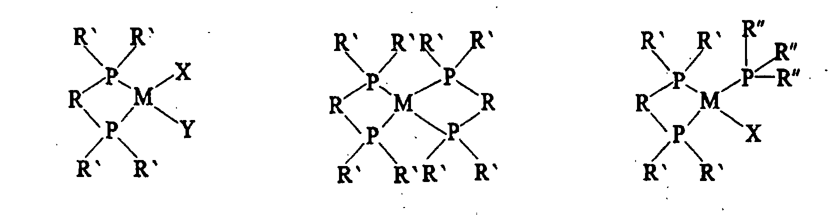 mit der Bedeutung von
- M: Pd, Pt, vorzugsweise Pd
- R: unabhängig an jeder Position organische Reste, die über O und/oder C-Atome an die Phosphoratome gebunden sind, insbesondere Arylreste oder Aryloxyreste mit 2 zur Bindung befähigten Stellen,
- R', R": unabhängig an jeder Position einwertige organische Reste, insbesondere Aryl- und/oder Aryloxyreste
- X, Y: unabhängig einwertige anionische Liganden.

Dabei sind die Ladungen ausgeglichen, wobei gegebenenfalls nicht koordinativ gebundene Kationen oder Anionen zum Ladungsausgleich dienen.

Vorzugsweise leiten sich die einwertigen Reste von Benzol oder Phenol und die zweiwertigen Reste von Biphenyl, 1,1'-Binaphthyl, 1,1'-Biphenyloxyund/oder 1,1'-Binaphthyloxyresten ab. Alle aromatischen Reste können dabei substituiert sein, beispielsweise durch einen oder mehrere C₁₋₆-Alkylreste oder entsprechende Alkoxyreste. Die Biphenyl- und Binaphthylreste, sowie davon abgeleitete Reste sind über 2 Molekülpositionen an das Phosphoratom gebunden. Dabei können die beiden Positionen an dasselbe Phosphoratom gebunden sein. Es ist auch möglich, daß sie an unterschiedliche Phosphoratome gebunden sind und so verbrückte Strukturen entstehen, die beispielsweise 2 Phosphoratome und 3 der genannten Reste aufweisen. Entsprechende geeignete zweizähnige Phosphitliganden sind in US 5,512,695 beschrieben. Die dort beschriebenen Phosphitliganden können auch in analoger Form als Phosphinliganden eingesetzt werden. Weitere geeignete ein- und zweizähnige aromatische Liganden sind in der WO 95/29153 beschrieben. Die beschriebenen Liganden können dabei ebenfalls als Phosphin- oder Phosphitliganden eingesetzt werden.

Erfindungsgemäß verwendbare Pd(II)-Komplexe weisen vorzugsweise die für die Pd(0)-Komplexe beschriebenen Phosphinliganden, Phosphitliganden, Arylcyanide oder Alkylcyanide als Liganden auf. Die Arylcyanide können dabei wie vorstehend substituiert sein. Vorzugsweise werden Benzonitril oder Acetonitril eingesetzt. Besonders bevorzugte Pd(II)-Komplexe sind Pd(C₆H₅CN)₂Cl₂, Pd(CH₃CN)₄(BF₄)₂ oder Pd((C₆H₅)₃P)₂Cl₂.

Die Katalysatoren können dabei bei der Umsetzung in situ gebildet werden.

Die erfindungsgemäß eingesetzten Katalysatoren werden üblicherweise in einer Menge von 0,01 bis 10 Gew.-% vorzugsweise in einer Menge von 0,5 bis 3 Gew.-%, besonders bevorzugt 1 bis 2 Gew.-%, bezogen auf die Menge der zu vinylierenden Phosphorigsäure-Verbindungen, insbesondere Dialkylphosphite, eingesetzt.

Die Reaktionstemperatur bei der Umsetzung beträgt 20 bis 80°C, bevorzugt 60 bis 80 °C.

Die Umsetzung kann dabei lösungsmittelfrei oder in Gegenwart eines inerten Lösungsmittels durchgeführt werden. Beispiele verwendbarer inerter Lösungs mittel sind cyclische Ether, wie THF, langkettige Ether, wie Triethylenglykoldimethylether oder Tetraethylenglykoldimethylether.

Die Umsetzung erfolgt unter Normaldruck oder erhöhtem Druck, vorzugsweise bei 1 bis 20, besonders bevorzugt 1,5 bis 6 bar (absolut). Dabei werden vorzugsweise die Phosphorigsäure-Verbindung der allgemeinen Formel (II) und der Katalysator vorgelegt und Acetylen eingeleitet. Nach Beendigung der Umsetzung kann das Produkt durch Destillation abgetrennt werden.

Das erfindungsgemäße Verfahren kann kontinuierlich oder diskontinuierlich ausgeführt werden.

Die Erfindung betrifft auch die Verwendung der vorstehend beschriebenen Katalysatoren bei der Herstellung von Vinylphosphonsäure-Verbindungen, insbesondere Vinylphosphonsäureestern, speziell Vinylphosphonsäuredialkylestern.

Nachstehend wird die Erfindung anhand von Beispielen näher erläutert.

### BEISPIEL 1

In einem 500 ml fassenden 4-Halskolben, versehen mit Innenthermometer, Trockeneiskühler und Gaseinleitungsrohr, wurden unter Rühren 6 g Dimethylphosphit mit 20 ml Tetrahydrofuran versetzt und unter Argon entgast. Nach Zugabe von 2 mol-% Tetrakis-(triphenylphosphin)-palladium(0) wurden 24 h lang 6 l/h Acetylen bei 60°C in die Reaktionslösung eingeleitet. Nach destillativer Aufarbeitung wurde Vinylphosphonsäuredimethylester in 90% Ausbeute isoliert.

### BEISPIEL 2

In einem 500 ml fassenden 4-Halskolben, versehen mit Innenthermometer, Trockeneiskühler und Gaseinleitungsrohr, wurden unter Rühren 25 g Diethylphosphit unter Argon entgast. Nach Zugabe von 1 mol-% Tetrakis-(triphenylphosphin)-palladium(0) wurden 24 h lang 6 l/h Acetylen bei 60°C in die Reaktionslösung eingeleitet. Nach destillativer Aufarbeitung wurde Vinylphosphonsäurediethylester in 95 % Ausbeute isoliert.

### BEISPIEL 3

In einem 300 ml fassenden Autoklaven wurden unter Rühren 65 g Dimethylphosphit mit 110 ml Tetrahydrofuran versetzt. Nach Zugabe von 0,7 mol-% Tetrakis-(triphenylphosphin)-palladium(0) wurden zunächst 5 bar Stickstoff und 10 bar Acetylen aufgepreßt. Nach Aufheizen des Autoklaven auf 65°C wurde Acetylen auf 20 bar nachgepreßt. Innerhalb von 20 h wurde die aufgenommene Acetylenmenge bei dieser Temperatur stündlich ergänzt, danach wurde abgekühlt, der Reaktionsaustrag mit Stickstoff gespült und destilliert. Vinylphosphonsäuredimethylester wurde in 95 % Ausbeute isoliert.

## Patentansprüche

1. Verfahren zur Herstellung von Vinylphosphonsäure-Verbindungen der allgemeinen Formel (I), 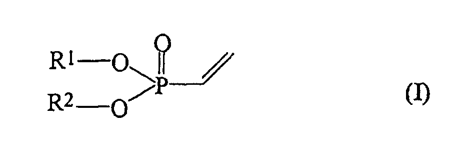 in der R¹ und R² unabhängig H, C₁₋₁₆-Alkyl-, C₆₋₁₂-Aryl-, C₇₋₁₂-Alkaryl- oder C₇₋₁₂-Aralkylreste sind, wobei die organischen Reste durch ein oder mehrere Halogenatome, Hydroxyl-, Acyl- oder Acetoxygruppen substituiert sein können,
durch Umsetzung von Phosphorigsäure-Verbindungen der allgemeinen Formel (II), 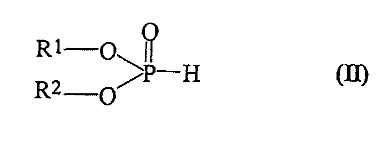 in der R¹ und R² die vorstehende Bedeutung haben,
mit Acetylen in Gegenwart eines Pd(II)-Komplexes und/oder eines Pd(0)-Komplexes oder entsprechenden Pt-Komplexen als Katalysator, bei einer Temperatur von 20 bis 80°C.

2. Verfahren nach Anspruch 1, **dadurch gekennzeichnet, daß** R¹ und R² unabhängig lineare C₁₋₁₆-Alkylreste sind.

3. Verfahren nach Anspruch 2, **dadurch gekennzeichnet, daß** nach der Umsetzung die Estergruppen gespalten werden, wobei Vinylphosphonsäure, R¹OH und R²OH erhalten werden.

4. Verfahren nach einem der vorstehenden Ansprüche, **dadurch gekennzeichnet, daß** ein Pd(0)-Komplex als Katalysator eingesetzt wird, der Triarylphosphinliganden oder Triarylphosphitliganden aufweist.

5. Verfahren nach Anspruch 4, **dadurch gekennzeichnet, daß** der Komplex Tetrakis-(triphenylphosphin)-Palladium(0) ist.

6. Verfahren nach einem der Ansprüche 1 bis 3, **dadurch gekennzeichnet, daß** ein Pd(II)-Komplex als Katalysator eingesetzt wird, der als Liganden Triarylphosphine, Triarylphoshite, Arylcyanide und/oder Alkylcyanide aufweist.

7. Verfahren nach Anspruch 5, **dadurch gekennzeichnet, daß** als Katalysator Pd(C₆H₅CN)₂Cl₂, Pd(CH₃CN)₄(BF₄)₂ und/oder Pd((C₆H₅)₃P)₂Cl₂ eingesetzt werden.

8. Verfahren nach einem der vorstehenden Ansprüche, das eines oder mehrere der nachstehenden Merkmale aufweist:
- Vorliegen eines inerten Lösungsmittels
- Druck 1 bis 20 bar
- eingesetzte Katalysatormenge 0,01 bis 10 Gew.-%, bezogen auf die Menge der eingesetzten Phosphorigsäureverbindungen
- kontinuierliche Verfahrensführung.

## Claims

1. A process for preparing vinylphosphonic acid compounds of the formula (I) 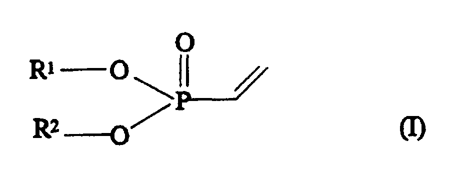 where R¹ and R² are, independently, H, C₁₋₁₆-alkyl, C₆₋₁₂-aryl, C₇₋₁₂-alkaryl or C₇₋₁₂-aralkyl, it being possible for the organic radicals to be substituted by one or more halogen atoms, hydroxyl, acyl or acetoxy groups, by reacting phosphorous acid compounds of the formula (II) 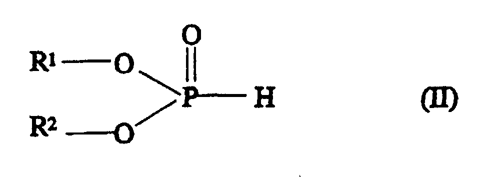 where R¹ and R² have the above meaning, with acetylene in the presence of a Pd(II) complex and/or of a Pd(0) complex or corresponding Pt complexes as catalyst, at a temperature of from 20 to 80°C.

2. A process as claimed in claim 1, wherein R¹ and R² are, independently, linear C₁₋₁₆-alkyl radicals.

3. A process as claimed in claim 2, wherein the ester groups are cleaved after the reaction, resulting in vinylphosphonic acid, R¹OH and R²OH.

4. A process as claimed in any of the preceding claims, wherein a Pd(0) complex which has triarylphosphine ligands or triaryl phosphite ligands is employed as catalyst.

5. A process as claimed in claim 4, wherein the complex is tetrakis(triphenylphosphine)-palladium(0).

6. A process as claimed in any of claims 1 to 3, wherein a Pd(II) complex which has as ligands triarylphosphines, triaryl phosphites, aryl cyanides and/or alkyl cyanides is employed as catalyst.

7. A process as claimed in claim 5, wherein Pd(C₆H₅CN)₂Cl₂, Pd(CH₃CN)₄(BF₄)₂ and/or Pd((C₆H₅)₃P)₂Cl₂ are employed as catalyst.

8. A process as claimed in any of the preceding claims, which has one or more of the following features:
- presence of an inert solvent
- pressure from 1 to 20 bar
- amount of catalyst employed from 0.01 to 10% of the weight of the phosphorous acid compounds employed
- process carried out continuously.

## Revendications

1. Procédé de préparation de composés de l'acide vinylphosphonique de formule générale (I) 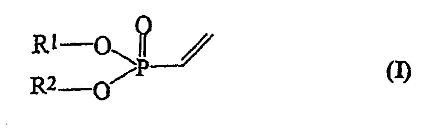 dans laquelle R¹ et R² représentent chacun indépendamment de l'autre H ou un radical alkyle en C₁₋₁₆, aryle en C₆₋₁₂, alcaryle en C₇₋₁₂ ou aralkyle en C₇₋₁₂, les radicaux organiques pouvant être substitués par un ou plusieurs atomes d'halogène ou groupes hydroxyle, acyle ou acétoxy,
par réaction de composés de l'acide phosphoreux de formule générale (II) 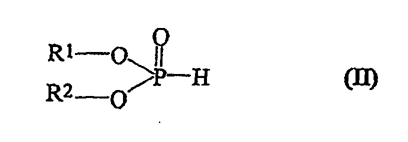 dans laquelle R¹ et R² ont les significations ci-dessus,
avec de l'acétylène en présence d'un complexe de Pd(II) et/ou d'un complexe de Pd(0) ou de complexes correspondants de Pt servant de catalyseur, à une température de 20 à 80°C.

2. Procédé selon la revendication 1, **caractérisé en ce que** R¹ et R² représentent chacun indépendamment de l'autre un radical alkyle linéaire en C₁₋₁₆.

3. Procédé selon la revendication 2, **caractérisé en ce que**, après la réaction, on dissocie les groupes esters avec obtention d'acide vinylphosphonique, de R¹OH et de R²OH.

4. Procédé selon l'une des revendications précédentes, **caractérisé en ce qu'**on utilise en tant que catalyseur un complexe de Pd(0) qui contient des ligands triarylphosphine ou des ligands phosphite de triaryle.

5. Procédé selon la revendication 4, **caractérisé en ce que** le complexe est le tétrakis(triphénylphosphine)-palladium(0).

6. Procédé selon l'une des revendications 1 à 3, **caractérisé en ce qu'**on utilise en tant que catalyseur un complexe de Pd(II) qui en tant que ligands comprend des triarylphosphines, des phosphites de triaryle, des cyanures d'aryle et/ou des cyanures d'alkyle.

7. Procédé selon la revendication 5, **caractérisé en ce qu'**on utilise en tant que catalyseur du Pd(C₆H₅CN)₂Cl₂, du Pd(CH₃CN)₄(BF₄)₂ et/ou du Pd((C₆H₅)₃P)₂Cl₂.

8. Procédé selon l'une des revendications précédentes, qui présente une ou plusieurs des caractéristiques suivantes :
- mise en place d'un solvant inerte,
- pression 1 à 20 bar,
- quantité utilisée de catalyseur 0,01 à 10 % en poids par rapport à la quantité des composés utilisés de l'acide phosphoreux,
- mise en oeuvre continue du procédé.
